# EUROPÄISCHE PATENTANMELDUNG

(11) **EP 1 488 988 A1**
(43) Veröffentlichungstag der Anmeldung: **22.12.2004**
(21) Anmeldenummer: 03013911.7
(22) Anmeldetag: 20.06.2003
(51) Int. Cl.: B62D 33/02, B60P 1/28

(54) **Kippmuldenanordnung und Verfahren zu deren Herstellung**

(71) Anmelder: Schmitz Gotha Fahrzeugwerke GmbH, 99867 Gotha (DE)
(72) Erfinder: Koch, Josef, 89081 Ulm (DE)
(74) Vertreter: Weber, Gerhard, Dipl.-Phys.

(57) **Zusammenfassung**

Für eine Kippmuldenanordnung kann durch Aufteilung der das Muldenvolumen begrenzenden Platten und der Tragrahmenanordnung in mehrere Module insbesondere bei Anwendung von Tauchlackierprozessen und nachfolgender Zusammensetzung der kompletten Mulde über Fügeverbindungen ein wirtschaftlicher Vorteil erzielt werden. Die Aufteilung ermöglicht auch die teilweise Verwendung von Leichtmetall für mechanisch geringer beanspruchte Module und führt damit zu einem höheren Nutzlastanteil.

## Beschreibung

Die Erfindung betrifft eine Kippmuldenanordnung und ein Verfahren zu deren Herstellung.

Kippmuldenanordnungen auf Lastfahrzeugen sind vorteilhaft zum Transport schüttfähiger Güter. Eine gebräuchliche, hinsichtlich des Verhältnisses von Nutzlast und Eigengewicht besonders vorteilhafte Form einer solchen Kippmuldenanordnung ist bei frontseitiger Anhebung um eine heckseitige Kippachse kippbar und über eine pendelnd gelagerte Heckklappe entleerbar. Mehrere Rahmenprofile und mehrere das Muldenvolumen begrenzte Platten sind miteinander zu einer stabilen Muldenanordnung verschweißt.

Die GB 1 503 534 beschreibt eine modulare Kippmulde, welche über lösbare Befestigungsmittel zum Transport in mehrere Module zerlegbar ist und am Zielort wieder zusammengesetzt und durch Verschweißen von Plattenrändern stabilisiert wird.

Eine besonders günstige Ausführung einer solchen Kippmuldenanordnung ist durch die sogenannte Rundmulde gegeben, bei welcher miteinander verschweißte Seitenwandbleche und ein Bodenwandblech ein Muldenvolumen im Querschnitt bogenförmig begrenzen. Das Muldenvolumen ist frontseitig durch eine Vorwandplatte abgeschlossen, welche ebenso wie mehrere Rahmenprofile mit den anderen Platten verschweißt ist. In einer anderen, insbesondere als Kastenmulde mit im wesentlichen rechteckigem Querschnitt des Muldenvolumens gebräuchlichen Form sind die Wandflächen durch aneinander anschließende Strangpressprofile gebildet, welche durch Rahmenholme eingefasst und mit diesen verschweißt sind.

Kippmulden mit einem Stahlboden und Seitenwänden aus Aluminium sind für eine Rundmuldenform aus der DE 201 21 273 U1 und für eine Kastenform aus der US 5 681 095 bekannt, wobei jeweils die Seitenwandmodule mit dem Bodenmodul über Fügeelemente, insbesondere Schrauben, Bolzen oder dergl. verbunden sind.

Der vorliegenden Erfindung liegt die Aufgabe zugrunde, eine wirtschaftlich günstig herstellbare derartige Kippmuldenanordnung sowie ein vorteilhaftes Verfahren zur Herstellung einer solchen Kippmuldenanordnung anzugeben.

Erfindungsmäße Lösungen sind in den unabhängigen Ansprüchen beschrieben. Die abhängigen Ansprüche enthalten vorteilhafte Ausgestaltungen und Weiterbildungen der Erfindung.

Die Erfindung weicht gezielt von der an sich verfahrenstechnisch und hinsichtlich der mechanischen Stabilität günstig erscheinenden gebräuchlichen Vorgehensweise, die nicht gegeneinander geschwenkten Muldenbestandteile anfänglich zu einem vollständigen und mechanisch sehr stabilen Gesamtaufbau zusammenzuschweißen und in einem ggf. mehrere Behandlungsschritte umfassenden Oberflächenbeschichtungsverfahren als Einheit zu handhaben, bewusst ab, indem einzelne Module einschließlich einer Oberflächenbehandlung separat vorgefertigt und ohne Schweißen allein durch Fügeelemente verbunden werden. Die Erfindung erzielt dabei trotz des Aufwands für die Fügeverbindungen erhebliche wirtschaftliche Vorteile.

Als Fügeelemente kommen insbesondere die an sich bekannten Elemente Schrauben, Bolzen, Niete sowie deren Sonderformen und Mischformen in Betracht. Öffnungen für die Fügeelemente in den Platten oder Rahmenteilen werden vorzugsweise vor der Oberflächenbeschichtung erzeugt, z.B. durch Bohren, Stanzen oder insbesondere durch Laserschneiden.

Bei der Erfindung kann vorteilhafterweise auf Erfahrungen von den gebräuchlichen Kippmuldenanordnungen zurückgegriffen werden. Insbesondere können für die Verbindung der Bestandteile der Module untereinander und die Oberflächenbeschichtung der getrennten Module vielfach dieselben Vorgehensweisen wie bei den gebräuchlichen Kippmuldenanordnungen gewählt werden. Schließlich kann auch der Aufbau der einstückig verschweißten Muldenanordnungen mit den erfindungsgemäß durch Fügeelemente verbundenen Modulen in dem Umfang nachvollzogen werden, dass herkömmliche Kippmuldenanordnungen ohne Änderungen an fahrzeugseitigen Einrichtungen, insbesondere Rahmen, Kipplager und/oder Presse, durch erfindungsgemäße Kippmuldenanordnungen austauschbar sind.

Die Erfindung ist von besonderem Vorteil im Zusammenhang mit der Oberflächenbeschichtung in Form eines oder typischerweise mehrerer aufeinanderfolgender Tauchvorgänge in unterschiedliche Bäder, insbesondere auch der kathodischen Tauchlackierung. Die kathodische Tauchlackierung mit einer Mehrzahl aufeinanderfolgender Tauchschritte ist insbesondere für einen effektiven Korrosionsschutz vorteilhaft. Die Tauchbadbehandlung einer komplett zusammengeschweißten Kippmulde erfordert zwar günstigerweise nur die Behandlung und Handhabung eines einzigen Teils, es werden aber Tauchbecken benötigt, welche unter Berücksichtigung allseitiger Mindestabstände deutlich größer sind als die Kippmulde selbst. Aus der Form der vollständig zusammengeschweißten Kippmulde resultiert ein in dem Sinne ungünstiges Verhältnis von behandelter Oberfläche zu Beckenvolumen, als je Tauchvorgang nur die durch die Oberfläche einer einzigen Tauchmulde gegebene Fläche behandelt wird.

Demgegenüber ergibt sich bei der vorliegenden Erfindung bei gleicher Oberflächenbehandlung mit Tauchbehandlung der vorgefertigten Module anstelle der kompletten Kippmulde die Möglichkeit, entweder
a) die Tauchbecken wesentlich kleiner zu gestalten, oder
b) bei Beibehaltung der Tauchbecken Abmessungen (z.B. um bei Bedarf auch in herkömmlicher Weise vollständig zusammengefügte, insbesondere verschweißte Kippmulden behandeln zu können), mehrere, insbesondere gleiche Module im Rahmen eines gemeinsamen Tauchvorgangs in demselben Tauchbecken gleichzeitig zu behandeln.

Der Vorteil bei der Variante a) liegt insbesondere in den weitaus geringeren Investitionskosten für kleinere Oberflächenbehandlungsanlagen. Für die bevorzugte Variante b) ergibt sich bei gegebenem Investitionsaufwand ein erhöhter Durchsatz modular zerlegter Kippmulden und somit durch einen höheren Nutzungsgrad der vorhandenen Anlagen eine verbesserte Wirtschaftlichkeit. Da in Oberflächenbeschichtungsanlagen für Kippmulden typischerweise 10 - 20 Tauchbecken, insbesondere für die bevorzugte kathodische Tauchlackierung, benötigt werden, können für die erfindungsgemäßen Kippmulden trotz des Aufwands für die nachträgliche Fügeverbindung der mehreren beschichteten Module zu einer kompletten Kippmulde die Stückkosten erheblich verringert werden. Die Oberflächenbehandlung in Tauchbecken umfasst insbesondere wenigstens einen der Schritte des Aufbringens einer Korrosionsschutzschicht oder einer Lackschicht, letztere insbesondere durch kathodische Tauchlackierung. Nach Aufbringen einer dieser Schichten werden Module nicht mehr einem Schweißvorgang unterzogen, welcher die geschlossene Schicht aufbrechen und deren Schutzfunktion zerstören könnte.

Der Kostenvorteil bei der Oberflächenbeschichtung kann noch gesteigert werden, wenn nicht alle verschiedenen Module mit der gleichen Beschichtung versehen werden, sondern bei einzelnen Modultypen auf bestimmte Oberflächenbehandlungsschritte verzichtet wird. Ferner können bei der separaten Oberflächenbehandlung verschiedener Modultypen vorteilhafterweise unterschiedliche Anforderungen berücksichtigt werden, indem sich die Verfahrensschrittfolgen der Oberflächenbeschichtung unterschiedlicher Module unterscheiden. Dies gilt insbesondere auch für verschiedene Module aus leichartigem Material, insbesondere Stahl. Beispielsweise soll die Bodenplatte an ihrer dem Muldeninneren zugewandten Seite eine abriebsfeste und auch für feuchtes Schüttgut gleitfähige Oberfläche aufweisen, wogegen die mechanische Beanspruchung der Innenfläche der im wesentlichen vertikalen Seitenwandplatten demgegenüber gering ist. Andererseits prägen die Seitenwandplatten mit ihrer Außenfläche wesentlich das Erscheinungsbild der Kippmulde und sind häufig auch firmenkennzeichnend in einer kundenspezifischen Farbe gehalten, wogegen die Außenfläche der Bodenplatte optisch kaum, jedenfalls nicht prägend in Erscheinung tritt. Dadurch kann beispielsweise bei der Bodenplatte und/oder an den Innenseiten der Seitenwandplatten und der Vorwandplatte der Verfahrensabschnitt zur kundenspezifischen Farbgebung entfallen und/oder eine bei den Seitenwandplatten und der Vorwandplatte nicht erforderliche zusätzliche mechanisch besonders vorteilhafte Eigenschaften aufweisende Deckschicht aufgebracht werden. Eine Deckschicht kann insbesondere auch durch andere Schritte als Tauchlackieren aufgebracht werden, insbesondere durch Spritzlackieren, Pulverbeschichtung oder andere bekannte Verfahren. Bei nur außenseitig auf Platten aufgebrachter Deckschicht ist die innerhalb eines Moduls gleiche Schichtenfolge dann bis zu der Deckschicht gegeben.

Die Erfindung ist auch vorteilhaft in Verbindung mit dem an sich bekannten Aufbau einer Kippmulde aus durch Fügeelemente verbundenen Modulen und erlaubt ferner, für unterschiedliche Module verschiedene Werkstoffe, insbesondere Werkstoffe, welche nicht oder schlecht miteinander verschweißbar sind, zu verwenden und auf ihre jeweilige Funktion in der zusammengefügten Kippmulde hin gezielt auszuwählen. Beispielsweise ist die vorzugsweise aus Stahl bestehende Bodenplatte mechanisch weitaus stärker belastet als die Seitenwandplatten, welche daher gemäß einer vorteilhaften Ausführungsform aus einem Leichtmetallwerkstoff, insbesondere einem Aluminiumwerkstoff bestehen können. Vorzugsweise bestehen je Modul auch die Rahmenteile aus gleichem oder ähnlichem Werkstoff wie die Platten. Auch in einem solchen Fall treten zusätzliche Vorteile bei der separaten Oberflächenbeschichtung unterschiedlicher Module auf, indem die Verfahrensschrittfolgen, insbesondere die anfänglichen Behandlungsschritte zur Vorbereitung und Erstbeschichtung der Moduloberflächen soweit erforderlich auf die jeweiligen Werkstoffe abgestimmt und insbesondere auch verschieden gewählt werden können.

Die vorteilhafte Verwendung eines Leichtmetallwerkstoffs für die Seitenwandplatten und vorzugsweise auch die Vorwandplatte hat den weiteren Vorteil, dass das Eigengewicht der Kippmulde verringert und somit ein höheres Schüttgutgewicht bis zum Erreichen des zulässigen Gesamtgewicht möglich ist. Günstig hierfür ist, auch die pendelnd gelagerte Rückwand aus einem Leichtmetallwerkstoff herzustellen.

Die modulare Vorfertigung einzelner Module ermöglicht ferner bei zentraler Vorfertigung eine kompakte Zusammenfassung gleichartiger Module einer Mehrzahl von Kippmulden und einen dadurch gegenüber fertigen Kippmulden volumenreduzierten Transport über größere Entfernungen. Dies ist wiederum von besonderem Vorteil im Zusammenhang mit der Oberflächenbeschichtung durch Tauchbehandlung, da die hohen Investitionskosten für die Beschichtungsanlagen nur an einem oder wenigen Orten anfallen, ohne dass dieser Investitionsvorteil durch überhohe Transportkosten wieder zunichte gemacht würde. Der Einsatz von Leichmetallwerkstoffen verringert zusätzlich das Transportgewicht in einer solchen Situation.

Für den Raumvorteil der separaten Module gegenüber vollständigen Kippmulden bei der Oberflächenbeschichtung weisen die einzelnen Module, insbesondere die Seitenwandplatten-Module vorteilhafterweise eine Tiefe auf, welche weniger als 30%, insbesondere weniger als 20% der Breite einer vollständigen Kippmulde beträgt. Unter der Tiefe eines Moduls sei dabei die kleinste Kantenlänge eines dem Modul unbeschriebenen Quaders verstanden. Durch gleichzeitige Behandlung gleicher Module können auch bei gewölbtem Verlauf der Platten, insbesondere der Seitenwandplatten und der Bodenplatte, hohe Packungsdichten erreicht werden, indem die mehreren Module in paralleler Ausrichtung so angeordnet, beispielsweise in ein Tauchgerüst eingehängt sind, dass die konvexe Wölbungsseite eines Moduls der entsprechenden konkaven Wölbungsseite des direkt benachbarten Moduls gegenübersteht und je nach Modultiefe auch in diese eintauchen kann.

Bei Auslegung der Tauchbeckenabmessungen auf vollständig zusammengesetzte Kippmulden können die mehreren gleichzeitig behandelten gleichartigen Module günstigerweise in einer ihrer Ausrichtung in einer vollständig zusammengesetzten eingetauchten Kippmulde gleichen oder zumindest annähernd gleichen Ausrichtung angeordnet sein, z.B. die Bodenplatten in horizontaler Ausrichtung vertikal übereinander, die Vorwandplatten vertikal ausgerichtet horizontal in Längsrichtung des Tauchbeckens aufeinanderfolgend und die Seitenwandplatten vertikal ausgerichtet in Breitenerstreckung des Tauchbeckens aufeinanderfolgend. Je nach Modultyp kann dabei die Anzahl gleichzeitig behandelbarer Module verschieden sein.

Bei der Oberflächenbeschichtung der Module kann vorteilhafterweise in einzelnen, insbesondere in oberen sich unter Druck senkenden Deckschichten wie z.B. einer Nasslackierung vorgesehen sein, kleinere Flächenbereiche mit welchen das Modul bei der nachfolgenden Verbindung der Module an einer Gegenfläche eines anderen Moduls anliegt, nicht zu beschichten, wofür solche Flächenbereiche vor dem Aufbringen der jeweiligen Schicht selektiv abgedeckt, z.B. abgeklebt werden können. Dies gilt insbesondere für Flächenbereiche in der Umgebung der Fügeelemente bzw. der hierfür in den Modulen vorgesehenen Verbindungsstrukturen. Auch eventuell bereits auf den Modulen vor der Oberflächenbeschichtung erzeugte Gewinde und/oder vorbefestigte Muttern etc. können von der Oberflächenbeschichtung ganz oder teilweise ausgespart werden.

Vorzugsweise erfolgt die Verbindung der Module insbesondere der Seitenwandmodule mit dem Bodenmodul mittels der Fügeelemente in der Weise, dass zumindest überwiegend einerseits Rahmenteile miteinander und andererseits Platten miteinander, ggf. über zusätzliche Verbindungselemente verbunden werden und keine oder nur für die mechanische Stabilität der Kippmulde nachrangige Verbindungen zwischen Rahmenteil eines Moduls und Platte eines anderen Moduls hergestellt werden.

Bei der Verbindung von Seitenwandmodulen und Bodenplattenmodul weisen die verbundenen Module entlang paralleler Plattenkanten an den Platten selbst und/oder an mit den Platten fest verbundenen Zwischenelementen, vorzugsweise durchgehenden Profilen, einander gegenüberstehende Anlageflächen auf. Eine auf Rahmenabschnitt(en) und Plattenoberfläche eines Moduls abgeschiedene Oberflächenbeschichtung erstreckt sich dabei insbesondere auch auf die Anlagefläche(n) dieses Moduls, welche im zusammengefügten Zustand der Kippmuldenanordnung verborgen ist.

Bei der Verbindung der Vorwandplatte mit den Seitenwandplatten und der Bodenplatte kann eine an sich gegen das Festsetzen von Schüttgut bekannte Schrägabdeckung der Stoßlinie der Vorwandplatte mit den Seitenwandplatten und der Bodenplatte vorteilhaft mit in die Verbindung einbezogen werden.

Bei der Verbindung der Platten untereinander können diese beispielsweise mit Anlageflächen entlang eines Kantenstreifens überlappend aneinander anliegen und mittels durch beide Platten durchgeführter Fügeelemente miteinander verbunden sein. An einer oder beiden Plattenkanten kann auch ein Randstreifen abgewinkelt sein, an welchem die Anlagefläche ausgebildet ist und welcher zur Verbindung dient. Ferner können Verbindungselemente, insbesondere kantenparallele Profile vorgesehen sein, welche mit einer Platte verbunden vorgefertigt, auch verschweißt sein können und an welchen wenigstens eine Anlagefläche ausgebildet ist und welche mit einer anderen Platte über die Fügeelemente oder aber mit beiden Platten über Fügeelemente verbunden werden. Solche und weitere Verbindungsmöglichkeiten sind anhand von Abbildungen noch eingehend veranschaulicht.

Die Verbindung der Rahmenteile kann gleichfalls über Überlappungen, Umbiegungen u.ä. erfolgen. Vorzugsweise weist jedoch an einer Fügestelle zwischen zwei Rahmenteilen wenigstens eines der Rahmenteile eine angeschweißte Flanschplatte auf, in welche die Fügeelemente eingreifen. Die Flanschplatte kann dabei zugleich den Innenraum eines als Rahmenteil eingesetzten Hohlprofils abschließen. In anderer Ausführung kann auch ein zusätzliches Verbindungsteil in einen Hohlraum eines Rahmenteils in einen Hohlraum eines Rahmenteils eingesteckt oder auf/um ein Rahmenteil gelegt und durch Fügeelemente fixiert werden. Die Verbindung der Rahmenteile erfolgt vorzugsweise über Schrauben.

Der Aufbau von Fahrzeugen oder Komponenten derselben aus mittels Fügeelementen verbundenen Einzelteilen oder mehrere Einzelteile enthaltenden Modulen ist an sich bekannt, ohne aber eine Anregung zu geben, eine Kippmulde mit deren besonderen Anforderungen an Stabilität und Funktionalität gemäß der Erfindung in der beschriebenen Weise aufzubauen und herzustellen. Insbesondere sind bei der Erfindung die Module in der zusammengefügten Kippmuldenanordnung nicht gelenkig verbunden, sondern bilden eine Baueinheit, bei welcher allen Modulen eine tragende Funktion für den Gesamtaufbau zukommt und dennoch eine Kombination unterschiedlicher Werkstoffe wie z.B. Stahl und Leichtmetall möglich ist.

Bei der Kombination unterschiedlicher Werkstoffe in Gesamtaufbau der Mulde kann es notwendig werden, zum Ausgleich unterschiedlichen thermischen Ausdehnungsverhaltens besondere Maßnahmen zu ergreifen indem z.B. eine elastische Verformung einzelner Module und/oder eine begrenzte gleitende Relativbewegung von Kanten und/oder Flächen gezielt vorgesehen ist.

Bevorzugt ist die Aufteilung der Kippmulde in Module, welche jeweils in sich wenigstens einen Abschnitt der Rahmenanordnung und wenigstens eine Platte der Plattenanordnung enthalten. Besonders vorteilhaft ist, insbesondere für eine Rundmuldenform, eine Ausbildung der Seitenwandmodule in der Weise, dass mit einer Seitenwandplatte ein entlang deren oberer Kante führender Rahmen-Längsabschnitt und von diesem der Plattenfläche entlang in Richtung des Kipplagers nach unten wegführend ein Rahmen-Stütz-Abschnitt untereinander und mit der Seitenplatte fest verschweißt sind. Dies ergibt ein besonders stabiles Modul an einer wichtigen Stelle des Muldenaufbaus. Vorzugsweise ist zur Begrenzung des Muldenvolumens zusätzlich zu den Modulen keine weitere Platte erforderlich.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Kippmulde in Seitenansicht
- Fig. 2: die Kippmulde nach Fig. 1 in Draufsicht
- Fig. 3: eine Frontansicht der Kippmulde nach Fig. 1
- Fig. 4: einen Schnitt D-D durch die Kippmulde nach Fig. 1
- Fig. 5: einen Schnitt E-E durch Fig. 1
- Fig. 6: eine erfindungsgemäße Modulaufteilung einer Kippmulde
- Fig. 7: ein Beispiel einer Vorwandplatten-Seitenwandplatten-Verbindung
- Fig. 8: Beispiele einer Seitenwandplatten-Bodenwandplatten-Verbindung
- Fig. 9: ein Beispiel einer Rahmenverbindung
- Fig. 10: ein Tauchbecken für eine vollständige Kippmulde
- Fig. 11: eine Anordnung mehrerer Seitenwandmodule in einem Tauchbecken
- Fig. 12: eine Anordnung von mehreren Bodenmodulen in einem Tauchbecken im Vergleich zu einer kompletten Kippmulde
- Fig. 13: einen Abmessungsvergleich
- Fig. 14: ein bevorzugtes Fügeelement für Platten
- Fig. 15: eine vorteilhafte Verbindungsvariante.

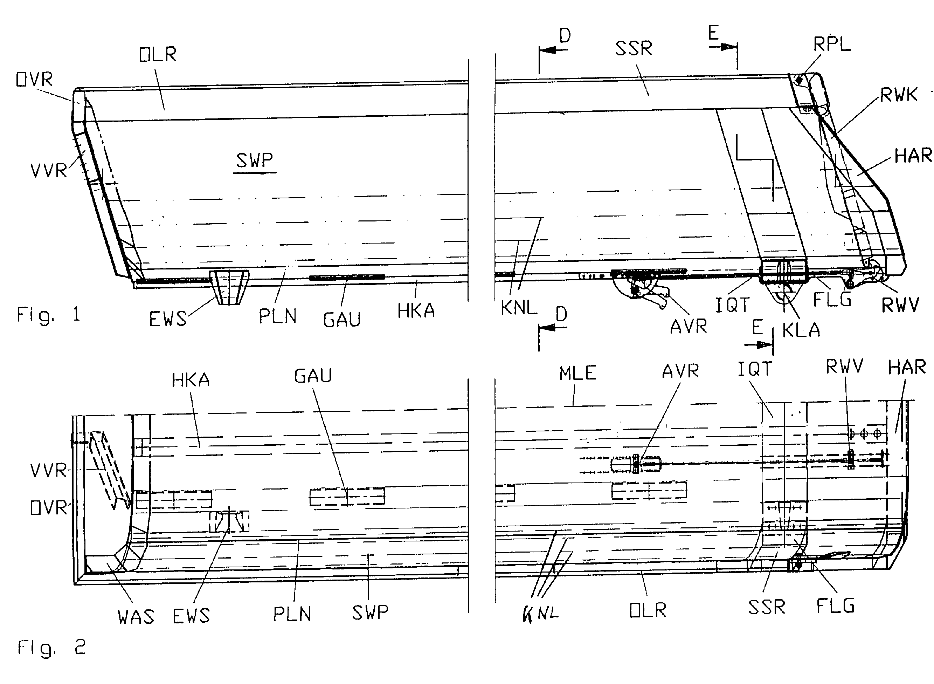

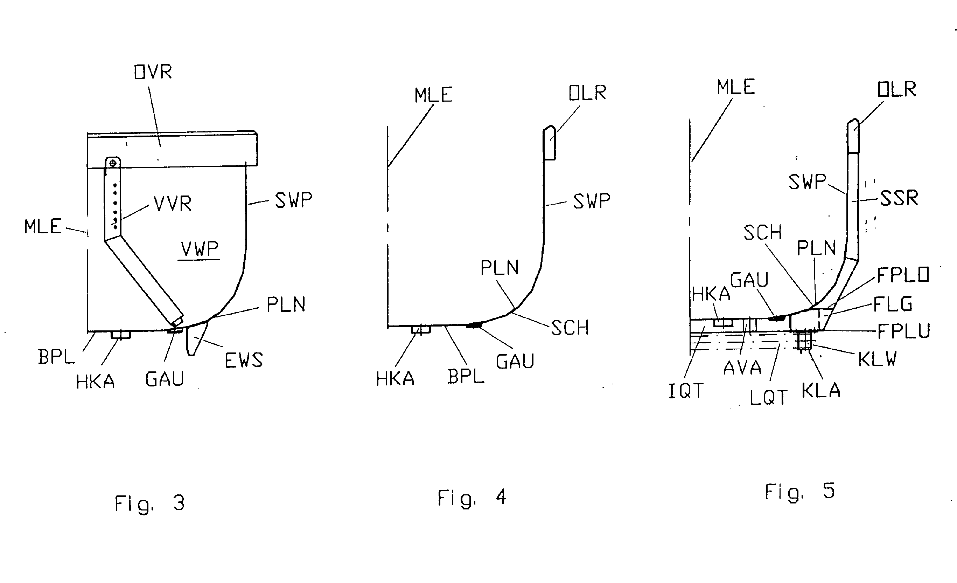

Die in Fig. 1 in Seitenansicht dargestellte Kippmulde in der Ausführung als Rundmulde ist im wesentlichen symmetrisch zu einer Mittellängsebene MLE aufgebaut und daher der Einfachkeit halber in der Draufsicht nach Fig. 2, der Frontansicht nach Fig. 3 und den Schnitten nach Fig. 4 und Fig. 5 nur in hälftiger Darstellung skizziert.

Das Kippmuldenvolumen ist durch eine Plattenanordnung mit einer frontseitigen Vorderwandplatte VWP, einer linken und einer rechten Seitenwandplatte SWP und einer Bodenplatte BP fest begrenzt und nach hinten durch eine um ein Pendellager PRL schwenkbare verriegelbare Rückwandklappe RWK abgeschlossen. Für eine halbschalenförmige Ausführung der Kippmulde mit gerundetem Übergang vom Boden zu einer vertikalen Seitenfläche sind die Seitenwandplatten und die Bodenplatte entlang Knicklinien KNL abgewinkelt.

Die genannten Platten der Plattenanordnung sind üblicherweise entlang von Stoß- und Überlappungskanten verschweißt, so dass eine das Muldenvolumen mehrseitig eingrenzende geschlossene Wandfläche entsteht. Eine Überlappungskante der Seitenwand SWP mit der Bodenplatte BPL ist mit PLN bezeichnet. Eintlang der Stoßkante der Vorderwandplatte VWP mit den Seitenwandplatten SWP und der Bodenplatte BPL kann ein den Winkel überbrückendes Blech WAS vorgesehen sein, welches das Absetzen von feuchtem Schüttgut in dem Winkel vermindert.

Wesentlich für die Stabilität der Anordnung ist eine Rahmenanordnung mit mehreren Rahmen-Abschnitten, insbesondere einem oberen vorderen Rahmenabschnitt OVR entlang der oberen Kante der Vorderwandplatte, links und rechts je einem oberen Rahmen-Längs-Abschnitt OLR, links und rechts je einem im wesentlichen vertikalen seitlichen Stütz-Rahmen-Abschnitt SSR sowie einem die Mulde untergreifenden inneren Querträger IQT. Stütz-Rahmen-Abschnitte SSR und Querträger IQT sind im skizzierten Beispiel durch ein Flanschgehäuse FLG verbunden. Die genannten Rahmenabschnitte sind an den Platten entlanggeführt und dabei mit diesen und an den Stoßstellen miteinander verschweißt.

Das Flanschgehäuse dient zur Verschraubung mit einer Kipplageranordnung KLA, über welche die Anordnung unter Einwirkung einer die Kippmulde frontseitig anhebenden Hydraulikpresse um eine Kippwelle KLW eines fahrzeugrahmenseitigen Querträgers LQT kippbar ist. Eine kippmuldenseitige Lageranordnung für die Presse ist typischerweise an entlang der Vorderwand verlaufenden Aussteifungsprofilen WR befestigt, welche ihrerseits mit der Vorderwand und dem oberen Rahmenholm verschweißt sind.

Die nach hinten über die Stütz-Rahmen-Abschnitte SSR hinausragenden Seitenwandplatten SWP und die Bodenplatte BPL können durch einen heckseitigen Einfassungsrahmen HAR abgeschlossen sein. Der Einfassungsrahmen und die Platten können dabei nach hinten über die Schließposition der Rückwandklappe hinausragen und eine Schüttführung bilden, welche beim Entleeren der Kippmulde verhindert, dass Schüttgut zu dicht an die Räder des Fahrzeugs gelangt und/oder mittels der eine gezielte Muldenentleerung in einen Behälter wie z.B. den Bunker eines Straßenffertigers möglich ist. Unter der Bodenplatte können Heizkanäle HKA zur Beheizung des Muldenbodens vorgesehen sein. Einweiser EWS gewährleisten beim Absenken der Mulde deren seitliche Zentrierung. Im abgesenkten Zustand kann die Bodenplatte BPL durch Gummiauflager GAU auf Trägern eines Fahrzeugrahmens abgestützt sein. Eine automatische Verriegelungsanordnung mit einem Hebel AVR, welcher beim Absenken der Mulde durch Anschlag am Fahrzeugrahmen betätigt wird und über ein Zugmittel entgegen einer Öffnungsfeder einen Rückwandriegel RWR schließend verschiebt, ermöglicht beim Anheben ein Ausschwenken der Rückwandklappe und gewährleistet in der abgesenkten Muldenpsoition die Verriegelung der Rückwandklappe. Das Aufspreizen der Kippmulde am heckseitigen Ende der oberen Rahmen-Längs-Abschnitte OLR unter dem Druck eingefüllten Schüttguts wird durch die in die Pendellager eingehängte Rückwandklappe verhindert. Alternativ oder zusätzlich kann auch ein Querträger an dieser Stelle fest montiert sein.

Bei einer Kastenmuldenform, insbesondere aus Leichtmetall, bilden typischerweise Holmprofile einen verschweißten Rahmen, dessen seitliche, vordere und untere Felder wiederum durch Platten oder vorzugsweise durch aneinander ausschließende parallele Strangpressprofile, die untereinander überlappend oder in Nut-Feder-Steckausführung aufeinanderfolgen und mit den Holmprofilen verschweißt sind. Die besonders beanspruchte Bodenplatte kann durch ein aufgelegtes Verschleißblech geschützt sein.

Die soweit beschriebene Kippmuldenanordnung ist an sich bekannt und hat sich bewährt. Bei der nachfolgend erläuterten Erfindung wird auf die Ausführungen zu der bekannten Anordnung aufgebaut und diese, soweit nicht die Erfindung bewusst davon abweicht, als gleichfalls geltend angenommen.

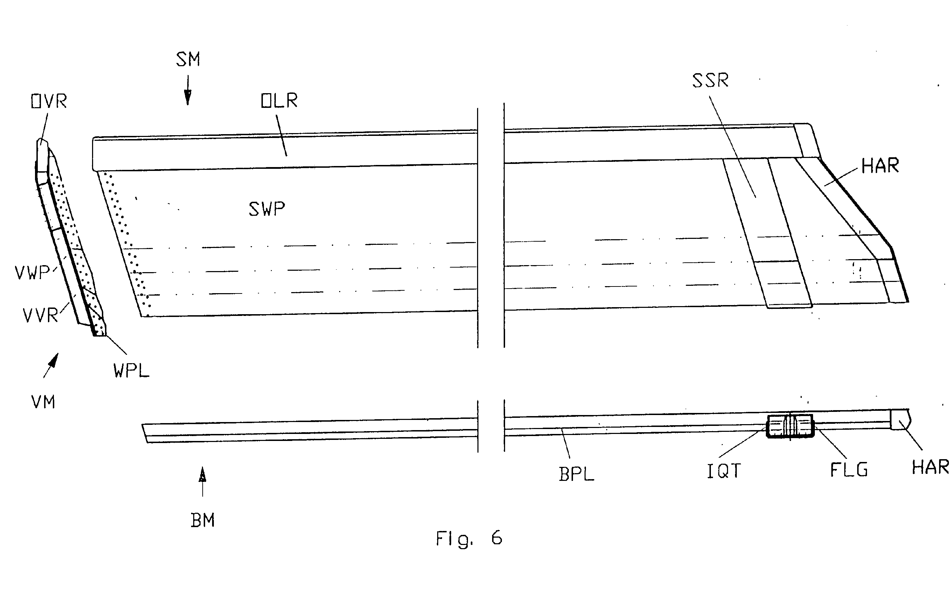

Die Fig. 6 zeigt die wesentlichen Module einer gemäß der Erfindung modular aufgebauten Kippmulde mit einem Vorderwandmodul VM, einem von zwei Seitenwandmodulen SM und einem Bodenmodul BM.

Das Vorderwandmodul enthält insbesondere den vorderen oberen Rahmenabschnitt OVR der mit der Vorderwandplatte VWP entlang deren oberer Kante verschweißt ist. Das Vorderwandmodul kann ferner wiederum die Aussteifungsprofile WR für die Befestigung der Lageranordnung aufweisen. Eine Winkelplattenanordnung WPL entlang der seitlichen und unteren Kante erfüllt vorteilhafterweise die Funktion des zu Fig. 1 bis Fig. 3 beschriebenen Winkel-abdeckblechs und dient gleichzeitig zur Verbindung der Seitenwandplatten und der Bodenplatte mit dem Vorderwandmodul, wofür in der Winkelplattenanordnung und korrespondierend in Seitenplatten und Bodenplatte Öffnungen FEO für die Fügeelemente vorbereitet sind. Das Vorderwandmodul zeigt eine Tiefenabmessung in Richtung der Flächennormale der Vorderwandplatte, welche primär durch die Winkelplattenanordnung und die Aussteifungsprofile bzw. den oberen vorderen Rahmenabschnitt bestimmt ist.

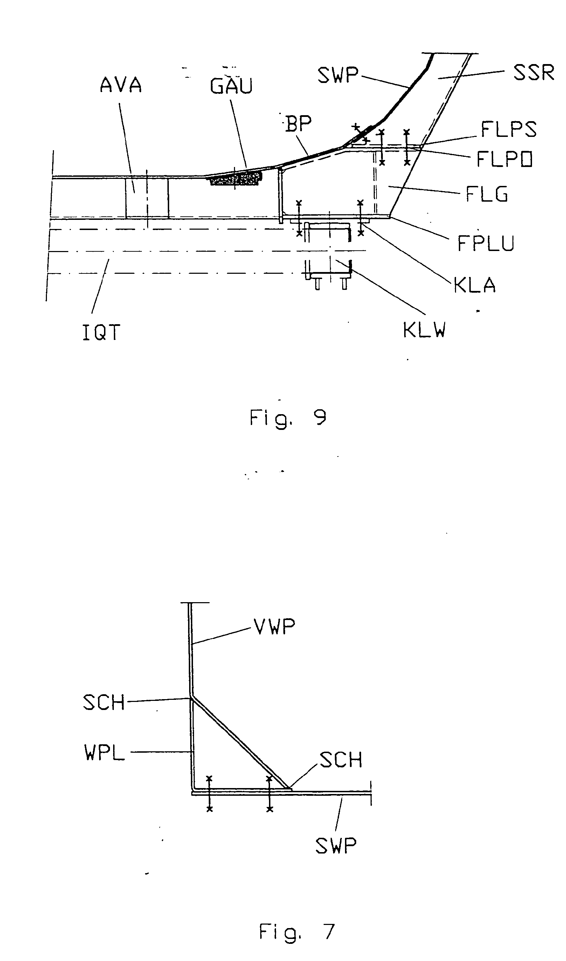

In Fig. 7 ist eine vorteilhafte Variante für eine Verbindung der Seitenwandplatte SWP mit der Vorderwandplatte VWP über eine mit der Vorderwandplatte verschweißte Winkelplattenanordnung WPL skizziert. Die Winkelplattenanordnung kann auch abschnittsweise mit Seitenwandplatten und/oder Bodenplatte verschweißt und mit der Vorderwandplatte mittels Fügeelementen verbunden sein.

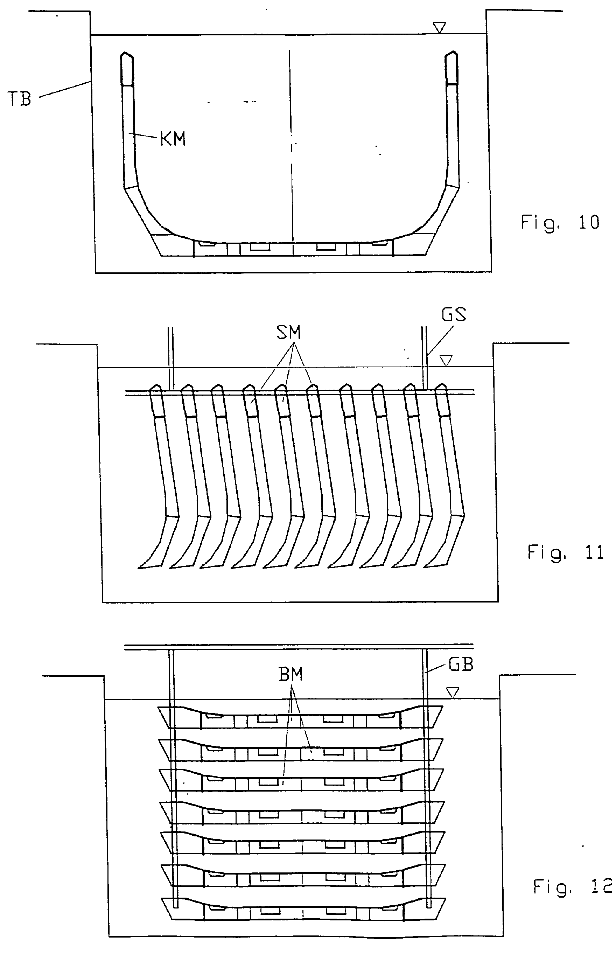

Das Bodenmodul BM enthält insbesondere die Bodenplatte und den mit dieser verschweißten inneren Querträger IQT. Vorteilhafterweise kann auch bereits das Flanschgehäuse FLG oder ein gleichwirkendes Bauteil mit dem Querträger IQT verschweißt oder in diesem ausgebildet sein. Das Flanschgehäuse dient vorteilhafterweise wieder zur Verschraubung mit einer Kipplageranordnung, welche nicht Bestandteil des Bodenmoduls ist, und weist hierfür in einer unteren Flanschplatte FPLU mehrere Bohrungen zur Durchführung von Schrauben auf. Zur Verschraubung mit der Kipplageranordnung ist das Flanschgehäuse von der Mittellängsebene abgewandt offen und auch für Werkzeug zugänglich. Eine obere Flanschplatte FPLO des Flanschgehäuses LFG weist gleichfalls Bohrungen auf, welche mit Bohrungen in einer Trägerflanschplatte FLPS am unteren Ende des Stütz-Rahmen-Abschnitts SSR des Seitenwandmoduls SM fluchten und zur Verbindung des mit der Bodenplatte verschweißten Rahmenteils, wozu im beschriebenen Beispiel der Querträger IQT und je ein Flanschgehäuse FLG links und rechts zu rechnen seien, mit dem Stütz-Rahmen-Abschnitt SSR über Fügeelemente, vorzugsweise Schrauben dienen. Eine hergestellte Verbindung ist in Fig. 9 skizziert, wobei Position und Richtung von Fügeverbindungen ohne Spezifizierung von Fügeelementen durch x---x Linien angedeutet sind. In dem Flanschgehäuse ist vorteilhafterweise noch ein nicht eingezeichneter Stützkörper zwischen oberer und unterer Flanschplatte vorgesehen. In dem Bodenmodul können zusätzlich Heizungskanäle HKA, Aufnahmen für die Gummiauflagen GAU, die Einweiser, ein Teil des heckseitig abschließenden Einfassungsrahmens HAR, Teile der Heckklappenverriegelung und andere enthalten sein, die der Oberflächenbeschichtung mit unterzogen werden können.

Besonders vorteilhaft ist der Aufbau des Seitenwandmoduls SM mit den Elementen Seitenwandplatte SWP, dem an deren oberer Kante entlang geführten Rahmen-Längs-Abschnitt OLR und dem der Fläche der Seitenwandplatte entlang in Richtung des Flanschgehäuses geführten Rahmen-Stütz-Abschnitt SSR, welche untereinander verschweißt sind. Der Rahmen-Stütz-Abschnitt verläuft dabei bevorzugt in an sich gebräuchlicher Weise von der Position der Rückwandklappe in Fahrtrichtung versetzt und in Fahrtrichtung geneigt, aber steil bis zum Rahmen-Längs-Abschnitt OLR. Die Anordnung und Verschweißung der Rahman-Abschnitte OLR und SSR untereinander und mit der Seitenwandplatte SWP ergibt ein Seitenwandmodul, welches besonders vorteilhaft die beim frontseitigen Anheben der Mulde auftretenden Kräfte abfängt und die Rahmenform stabilisiert.

Das Seitenwandmodul kann als weitere Bestandteile Abschnitte des hinteren Einfassungsrahmens HAR, des Pendellagers für die Rückwandklappe usw. enthalten.

Eine bevorzugte Verbindung des Stütz-Rahmen-Abschnitts SSR wie in Fig. 9 skizziert sieht vor, den als U-Profil auf die Seitenwandplatte aufgeschweißten Stütz-Rahmen-Abschnitt an seinem unteren Ende durch eine aufgeschweißte Flanschplatte FLPS abzuschließen, welche im wesentlichen horizontal und parallel zur oberen Flanschplatte FLPO des Flanschgehäuses FLG ausgerichtet ist. Die Verbindung von vorderem oberem Rahmenabschnitt OVR und den seitlichen Rahmen-Längs-Abschnitten OLR der Seitenwandmodule überträgt primär die anhebende Kraft der Presse von dem vorderen oberen Rahmenabschnitt OVR auf die Rahmen-Längs-Abschnitte OLR und kann verschiedene für derartige Beanspruchung geeignete, dem Fachmann geläufige Formen realisiert sein.

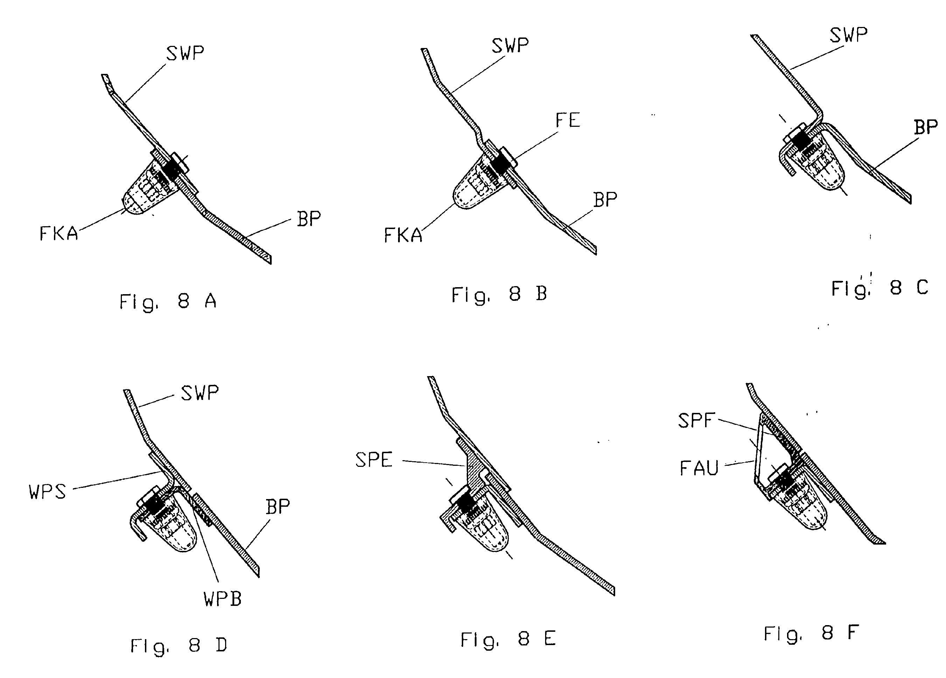

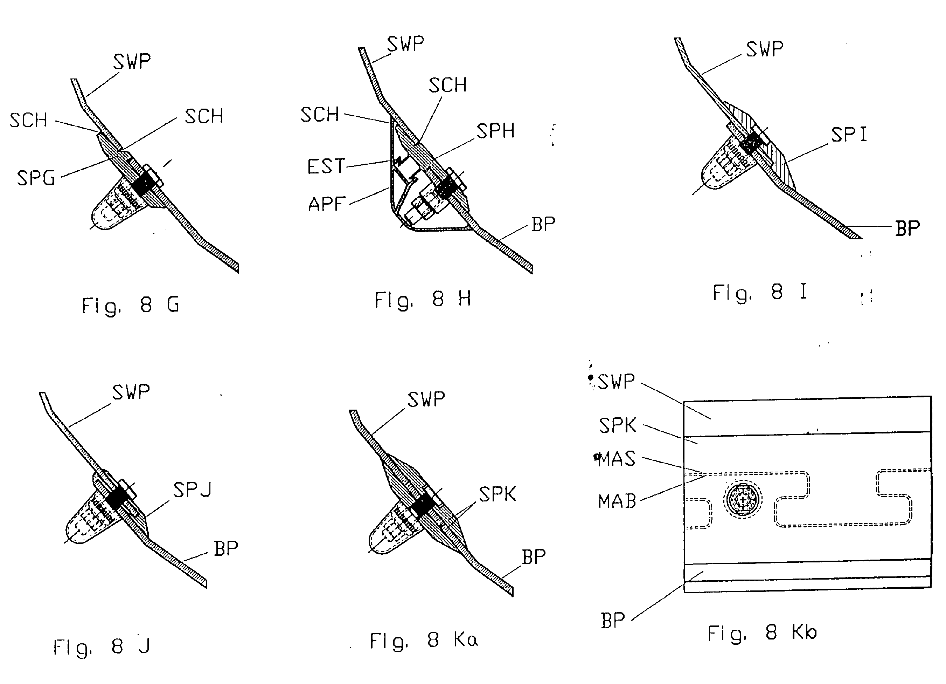

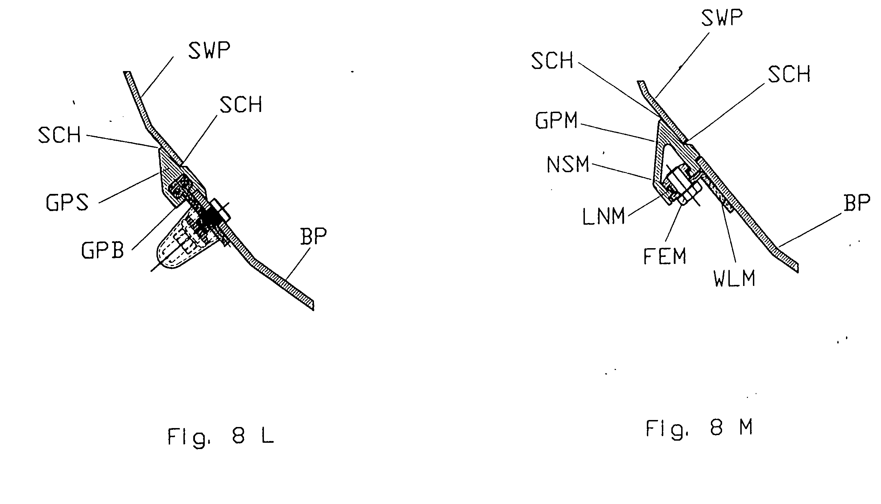

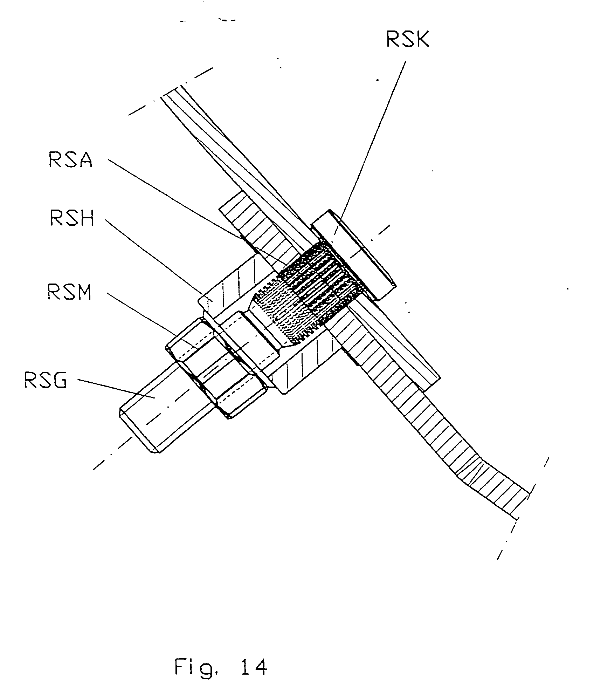

Die Verbindung der Seitenwandplatte SWP mit der Bodenplatte BP entlang einer Plattennaht PLN ist in Fig. 6 durch Punktreihen von vor der Oberflächenbeschichtung vorbereiteten Öffnungen in den beiden Platten angedeutet. In Fig. 8 sind mehrere Varianten von Verbindungsmöglichkeiten nicht abschließend angeführt. Ein dabei bevorzugt eingesetztes Fügeelement FF ist in Fig. 14 vergrößert dargestellt und näher erläutert.

Eine erste einfache Variante 8A sieht vor, dass die kantennahen Randabschnitte der Platten SWP und BP ähnlich der gebräuchlichen geschweißten Variante überlappen und durch fluchtende Öffnungen in beiden Platten im Überlappungsabschnitt angedeutete Fügeelemente hindurchgeführt sind. Die Variante B unterscheidet sich hiervon dadurch, dass wenigstens eine der Platten beim Übergang zu dem überlappenden Randabschnitt eine Stufe aufweist und so auf einer Seite der Platten ein annähernd stufenloser Übergang erfolgt. Die Fügeelemente können hierbei sowohl auf Zug als auch auf Scherung belastet sein. Ein nach außen überstehender Teil der Fügeelemente FE kann durch eine aufgesteckte Kappe FKA abgedeckt sein.

Eine weitere, nicht skizzierte Variante sieht bei wiederum überlappenden parallelen Randabschnitten vor, mit jeder Platte entlang deren Kante eine Hilfsleiste auf der der anderen zu verbindenden Platte zugewandten Fläche kantenparallel fest zu verbinden, beispielsweise über Schweißnähte und/oder Punktschweißverbindungen in der Hilfsleistenfläche, und die so verstärkten Plattenkanten unter Einschluss der Hilfsleisten so zu verbinden, dass die einander zugewandten Kanten der Hilfsleisten aneinander anliegen und flächenparallele Zugkräfte abfangen, während die durch die beiden Platten und die Hilfsleisten durchgeführten Fügeelemente scherkraftfrei sind und nur flächennormale Zugkräfte abfangen und hierfür vorgespannt sein können.

Eine Variante 8C sieht vor, beide Plattenkanten in einem Randstreifen nach außen abzuwinkeln und die Öffnungen für die Fügeelemente in dem abgewinkelten Randstreifen vorzusehen. Die Fügeelemente liegen dann vollständig außerhalb des Muldenvolumens. Im skizzierten Beispiel ist der Randstreifen der von oben kommenden Seitenwandplatte nochmal in sich so abgewinkelt, dass er die Verbindungsstelle teilweise verdeckt.

Bei der Variante 8D sind Winkelprofile WPS, WPB als Hilfselemente mit den Randabschnitten der Platten SWP, BP verschweißt und ersetzen die abgewinkelten Randstreifen der Variante D. Die Kanten der Platten SWP und BP sind gering beabstandet stumpf aufeinander zu gerichtet.

In Variante 8E ist das Winkelprofil WPS nach Variante 8C ersetzt durch ein ähnlich geformtes Strangpreßprofil SPE. Die Seitenwandplatte SWP und die Bodenplatte BP überlappen, ohne aber direkt untereinander verbunden zu sein.

Variante 8F zeigt ein mit der Seitenwandplatte verschweißtes Strangpreßprofil SPF, in welchem die Fügeelemente von der Profilform umgeben und durch Öffnungen FAU im Profil zugänglich sind.

Bei den Varianten 8G, 8H sind speziell geformte Brückenprofile insbesondere Strangpreßprofile vorgesehen, welche jeweils an beiden Platten SWP und BP anliegen und mit einer der beiden Platten SWP über eine einfache oder vorzugsweise zweifache Schweißnaht SCH und mit der anderen Platte BP über Fügeelemente verbunden ist. Bei der Ausführung nach Variante 8G liegt das Profil SPG an beiden Platten jeweils an der Außenseite an. Bei der Variante 8H liegt das Profil SPH an der Innenseite der Bodenplatte BP an. Das Profil SPH zeigt nach außen weisend eine Einraststruktur EST, auf welche eine Gegenstruktur eines für mehrere oder alle Fügeelemente dieser Plattennaht gemeinsam Abdeckprofil APF einrastend aufgesteckt werden kann. Die Verbindung des Abdeckprofils APF mit dem Brückenprofil SPH kann auch durch Niete, Schrauben, Haftverschlüsse etc. erfolgen.

Das Profil SPI nach Variante 81 kann mit einer der beiden Platten verschweißt sein, kann aber auch nur an der Innenseite der beiden Platten ergänzend zu der Variante 8A anliegen und Stufen am Übergang zwischen den Platten und am Fügeelement glätten. Der Schraubenkopf der als Fügeelement eingesetzten Rändelschraube ist hier in einer Vertiefung des Profils SPI versenkt.

Bei der Variante 8J kann das Brückenprofil mit SPJ wiederum mit einer der beiden Platten verschweißt sein. Das Profil umfasst eine der Platten beidseitig. Das Fügeelement reicht durch das Brückenprofil und beide Platten hindurch.

Bei der Variante 8K liegen beide Platten in einer Ebene (Schnitt Fig. 8Ka) und greifen mit komplementär mäandrierenden Kantenverläufen MAS bzw. MAB ineinander (Draufsicht Fig. 8Kb). Das zweiteilige Profil SPK deckt die ineinandergreifenden Strukturen ab und hält die beiden Plattenkanten in der gemeinsamen Plattenebene. Die ineinandergreifenden Kantenverläufe können in Längsrichtung des Profils SPK durch Lücken voneinander beabstandet sein, welche eine begrenzte relative Längsverschiebung der beiden Platten erlauben, wenn diese aus verschiedenen Werkstoffen, insbesondere mit stark unterschiedlichem Wärmeausdehnungsverhalten bestehen.

Die Verbindungsvarianten 8L, 8M für zwei entlang einer linearen Plattennaht zu verbindende Platten SWP, BP sind von besonderem Vorteil für die Verbindung von Platten mit deutlich verschiedenem Wärmeausdehnungsverhalten. Die Lage der Platten relativ zueinander ist dabei nur senkrecht zum Verlauf der Plattennaht, in Fig. 8L, 8M in der Zeichenebene festgelegt, wogegen in Richtung der Plattennaht, d.h. senkrecht zur Zeichenebene von Fig. 8L, 8M eine evtl. beschränkte und/oder nur abschnittsweise gegebene Verschiebbarkeit der verbundenen Platten möglich ist. Hierfür sind in Fig. 8L an beiden Plattenkanten Profile GPS bzw. GPB befestigt, welche mit komplementären Querschnitten ineinandergreifen und eine Fügeverbindung der beiden Platten in Form einer Festlegung der relativen Position der beiden Platten SWP, BP in der Zeichenebene bewirken, dabei aber eine Verschiebung parallel zur Plattennaht senkrecht zur Zeichenebene erlauben. Die Profile können jeweils mit der Platte verschweißt oder auch durch Fügeelemente verbunden sein, letzteres insbesondere in Verbindung mit gleichen Werkstoffen beider Profile und unterschiedlichen Werkstoffen beider Platten.

Bei der Variante nach Fig. 8M ist eine der Platten (SWP) mit einem Profil GPM verschweißt, welches mit einer Längsnut LNM einer mit der anderen Platte (BP) verschweißten Winkelleiste WLM zuweist. In dem Profil GPM liegen längsverschiebbar Nutensteine NSM, welche mit durch Öffnungen der Winkelleiste WLM ragenden Fügeelementen FEM eine relative Festlegung der Platten in der Zeichenebene bewirken. Die Verschiebbarkeit der Nutensteine NSM im Profil GPM bleibt dabei erhalten.

Ein Ausgleich unterschiedlichen thermischen Ausdehnungsverhaltens am Zusammenstoß von mehr als zwei Platten kann beispielsweise durch Gleiten von überlappenden Flächen und/oder Zulassen reversibler Verformung einer oder mehrerer Platten, insbesondere der Vorwandplatte bei einer Kippmuldenanordnung der in Fig. 6 skizzierten Art erfolgen. Weitere Maßnahmen zum Ausgleich von Unterschieden im Ausdehnungsverhalten sind an sich aus anderen Bereichen der Technik bekannt.

Bei den jeweiligen Verbindungsvarianten kann vorteilhafterweise vorgesehen sein, aneinander anliegende und mechanisch auf Druck und/oder Flächenreibung beanspruchte Flächen bei der Oberflächenbeschichtung der Module nicht mit der vollständigen Schichtenfolge zu versehen und insbesondere Nasslackschichten an solchen Flächen wegzulassen, indem beispielsweise bei dem jeweiligen Beschichtungsvorgang die entsprechenden Flächenbereiche insbesondere Flächenbereiche um die Öffnungen für die Fügeelemente abgeklebt wird.

In Fig. 10 ist im Querschnitt ein Tauchbecken TB für einen Tauchbearbeitungsvorgang, z.B. Grundieren, Reinigen, Lackieren etc., mit einer komplett vormontierten Kippmulde KM skizziert, woraus ersichtlich ist, dass die mehreren Wandungen, Bodenplatte und Rahmen nur einen geringen Anteil des Beckenvolumens beanspruchen und der weitaus größte Teil des Beckenvolumens durch das freie Muldenvolumen eingenommen ist, welches gleichwohl durch das im Becken vorhandene Behandlungsmittel ausgefüllt werden muss.

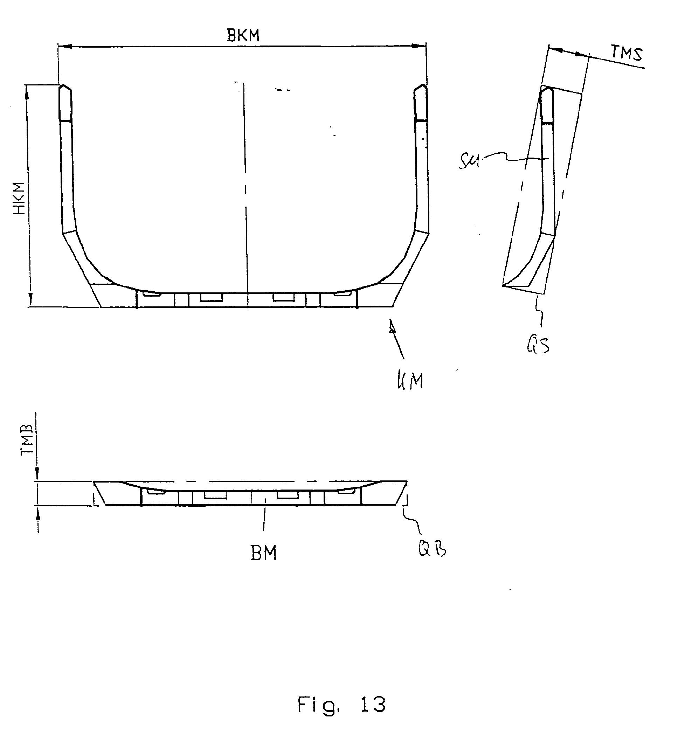

Bei gleicher Beckengröße kann durch eine Mehrzahl an einem Gehänge GS in soweit zulässig enger Nachbarschaft und paralleler Ausrichtung aufgehängeter gleichartiger Seitenwandmodule SM ein wesentlich höherer Raumanteil des Tauchbeckens TB durch die Module in Anspruch genommen und eine wesentlich größere Gesamtoberfläche aller Module im Vergleich zu einer komplett vormontierten Mulde in einem Tauchgang bearbeitet werden. Eine entsprechende Situation für eine Mehrzahl gleichzeitig im Tauchbecken an einem Gehänge GB eingetauchter Bodenmodule ist in Fig. 12 skizziert.

Fig. 13 zeigt beispielhaft für ein Seitenwandmodul SM und ein Bodenmodul BM die Abmessungsverhältnisse im Querschnitt im Vergleich zu einer komplett montierten Mulde KM, welche eine Breite BKM und eine Höhe HKM aufweise. Die Abmessung der Kippmulde KM sowie der Module SM und BM sei senkrecht zur Zeichenebene wesentlich größer als in der Zeichenebene. Zur Bestimmung der kleinsten Tiefe eines einem Modul SM oder BM umbeschreibbaren Quaders QM bzw. QB genügt dann die Betrachtung in der Zeichenebene der Fig. 13, woraus sich als minimale Tiefe des Bodenmoduls BM das eingetragene Maß TMB ergibt. Für das Seitenwandmodul SM kann die minimale Tiefe TMS bei Schrägstellung des Moduls weiter reduziert werden. Vorteilhafterweise ist TMS ≤ 0,3 BKM insbesondere TMS ≤ 0,2 BKM und/oder TMB ≤ 0,3 HKM, insbesondere TMB ≤ 0,2 HKM, so dass bei der gruppenweisen Zusammenfassung gleichartiger Module für einen Tauchvorgang eine hohe Packungsdichte erreicht werden kann. Eine analoge Betrachtungsweise kann für das Vorderwandmodul durchgeführt werden.

In Fig. 14 ist vergrößert eine Verbindung zweier Platten mittels eines bevorzugten Fügeelements in Form einer Schraube mit einem Schraubenschaft, welcher dem Schraubenkopf zugewandt einen ersten gerändelten Abschnitt RSA und dem Schraubenkopf abgewandt einen zweiten Abschnitt RSG mit einem Gewinde aufweist. Der Durchmesser des Gewindeabschnitts RSG ist geringfügig kleiner als der Durchmesser der fluchtenden Öffnungen in den zu verbindenden Platten. Die Rändelung des Abschnitts RSA ist durch eine Umfangszahnung mit zur Schaftlängsachse parallelen Zahnflanken gegeben. Der Schaftdurchmesser in dem gerändelten Abschnitt RSA ist bezüglich der radial nach außen weisenden Zahnspitzen geringfügig größer, bezüglich der radial innen liegenden Zahngründe geringfügig kleiner als der Durchmesser der Plattenöffnungen, so dass der Rändelabschnitt sich in die Öffnungsränder einfurcht und eine große Kontaktfläche zwischen den Rändelschaft und den Platten entsteht. Dies resultiert zum einen in einer spielfreien Festlegung der Platten und zum anderen in einer hohen Scherfestigkeit des Schaftes im Rändelabschnitt. Die Länge des Rändelabschnitts ist vorzugsweise größer als die Summe der Dicken der beiden Platten, so dass ein und dasselbe Fügeelement auch für Verbindungen mit Brückenprofilen wie in verschiedenen Varianten von Fig. 8 skizziert verwendbar ist. Zwischen eine Mutter RSM und die dieser zugewandten Plattenfläche ist vorteilhafterweise eine Hülse RSH eingefügt, welche beim Anziehen der Mutter nicht mitgedreht wird und so die Plattenbeschichtung nicht beschädigt. Die aufgrund der Hülsenlänge größere Schaftlänge zwischen Schraubenkopf RSK und Mutter RSM bewirkt vorteilhafterweise eine höhere Elastizität der Schraubenverbindung.

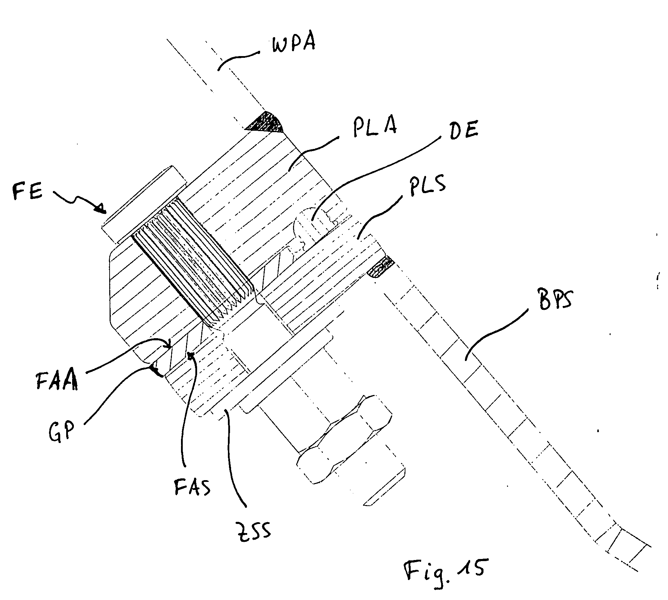

Fig. 15 zeigt in Abwandlung der Fig. 8 D, E, F oder M mit außenliegenden Fügeelementen eine bevorzugte Ausführungsform einer Plattenverbindung, welche insbesondere zur Verbindung von Platten aus Materialien mit unterschiedlichen Ausdehnungskoeffizienten, beispielsweise einer Wandplatte WPA aus Aluminium und einer Bodenplatte BPS aus Stahl, besonders geeignet ist. Eine erste Profilleiste PLA ist mit der Unterkante der Wandplatte WPA verschweißt, eine zweite Profilleiste PLS mit der Bodenplatte BPS. Profilleisten PLA und PLS bestehen bei unterschiedlichen Materialien der Platten WPA, BPS aus jeweils zuverlässig mit den Plattenmaterialien verschweißbaren Materialien, also z. B. Aluminium für PLA und Stahl für PLS. Die Profilleisten weisen einander zugewandt Anlageflächen FAA bzw. FAS auf, welche im wesentlichen parallel zueinander und senkrecht zu den Flächen der Wandplatten verlaufen. Zwischen die Anlageflächen FAA, FAS sind Gleitplatten GP eingefügt. Bei einer Aluminium-Profilleiste PLA und einer Stahl-Profilleiste PLS und entsprechenden Materialien der Platten WPA, BPS sind die Gleitplatten vorteilhafterweise über die Fügeelemente FE relativ zu der Profilleiste PLA fixiert und bestehen aus einem Material, welches zu der Anlagefläche FAS gute Gleiteigenschaften und hohe Verschleißfestigkeit zeigt, vorzugsweise aus Stahl. Bei relativen Längsverschiebungen der Platten WPA, BPS aufgrund unterschiedlicher Wärmeausdehnungen gleitet die Anlagefläche FAS an den Gleitplatten GP entlang. Anstelle der Profilnut der Fig. 8M können im Beispiel der Fig. 15 vorteilhaft Langlöcher in der Stahl-Profilleiste PLS vorgesehen sein, in welchen die fest in der Profilleiste PLA verankerten Fügeelemente senkrecht zur Zeichenebene gleiten können. Auf der der Profilleiste PLA abgewandten Seite können Zwischenscheiben ZSS eingefügt sein, welche ihrerseits mit den Fügeelementen verschoben werden und dabei auf der Profilleiste PLS gleiten oder auf welchen die Flügelelemente gleiten. Die Fügeelemente FE selbst seien im wesentlichen gleich aufgebaut wie in Fig. 14. An der dem Muldenvolumen zugewandten Seite der Profilleisten PLA, PLS ist ein vorteilhafterweise elastisches Dichtelement zwischen die Profilleisten eingefügt, welches senkrecht zur Zeichenfläche über die ganze Länge der Profilleisten durchgeht.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Insbesondere für die Verbindungen mittels der Fügeelemente und die Fügeelemente selbst eine Vielzahl von Varianten denkbar.

## Patentansprüche

**1.** Kippmuldenanordnung mit einem durch eine Plattenanordnung umgebenen Muldenvolumen und einer Muldenrahmenanordnung, wobei
die Plattenanordnung wenigstens eine Vorderwandplatte, eine linke und eine rechte Seitenwandplatte und eine Bodenplatte und die Muldenrahmenanordnung wenigstens einen vorderen Rahmen-Abschnitt, einen linken und einen rechten Rahmen-Längs-Abschnitt und einen die Mulde unten umgreifenden Boden-Rahmen-Abschnitt enthält, die verschiedenen Platten mit jeweils daran entlangführenden und mit den Platten fest verbundenen Rahmen-Abschnitten mehrere Module bilden,
die Module untereinander ohne Verschweißung unmittelbar und/oder mittels Zwischenelementen über Fügeverbindungen verbunden sind,
verbundene Module entlang von Plattenkanten an diesen oder an mit diesen fest verbundenen Zwischenelementen einander gegenüberstehende Anlageflächen aufweisen und wenigstens ein Modul eine im wesentlichen vollständige Oberfächenbeschichtung aufweist.

**2.** Anordnung nach Anspruch 1, **dadurch gekennzeichnet, dass** wenigstens ein Modul eine Oberflächenbeschichtung auf Platte und Rahmen-Abschnitten aufweist, welche auch auf den Anlageflächen des Moduls gegeben ist.

**3.** Anordnung nach Anspruch 1 oder 2, **dadurch gekennzeichnet, dass** die Oberflächenbeschichtung wenigstens eine Korrosionsschutzschicht und/oder eine Grundierungsschicht umfasst.

**4.** Anordnung nach einem der Ansprüche 1 bis 3, **dadurch gekennzeichnet, dass** wenigstens ein Modul eine von anderen Modulen verschiedenen Oberflächenbeschichtung aufweist.

**5.** Anordnung nach einem der Ansprüche 1 bis 4, **dadurch gekennzeichnet, dass** die Oberfläche wenigstens eines Moduls an einer Anlagefläche zumindest in Teilbereichen um Fügeelemente eine gegenüber dem überwiegenden Teil der Modulfläche um wenigstens eine Beschichtungslage reduzierte Oberflächenbeschichtung aufweist.

**6.** Anordnung nach Anspruch 1 bis 5, **dadurch gekennzeichnet, dass** die Seitenwandplatten eines Seitenwandmoduls und die Bodenplatte entlang der Plattenkanten durch Umbiegungen der Platten selbst und/oder durch aufgesetzte Profile als Zwischenelemente von den Platten nach außen abstehende und flächig aneinander anliegende Stege aufweisen, welche durch vollständig außerhalb des Muldenvolumens liegende und wenigstens die Platte oder en auf diese aufgesetztes Profil beider Module durchgreifende Fügeelemente zusammengehalten sind.

**7.** Anordnung nach einem der Ansprüche 1 bis 6, **dadurch gekennzeichnet, dass** die Seitenwandplatten mit der Bodenplatte unter Vermittlung jeweils eines kantenparallelen Verbindungsprofils, welches an wenigstens einer der Platten mittels der Fügeelemente befestigt ist, verbunden ist.

**8.** Anordnung nach Anspruch 7, **dadurch gekennzeichnet, dass** ein kantenparalleles Verbindungsprofil mit einer der verbundenen Platten verschweißt ist.

**9.** Anordnung nach einem der Ansprüche 1 bis 8, **dadurch gekennzeichnet, dass** zwischen gegenüberstehenden Anlageflächen zweier über Fügeelemente verbundener Module Platten mit zu einer Anlagefläche besseren Gleiteigenschaften als zu der anderen Anlagefläche, insbesondere Stahlplatten eingeklemmt sind.

**10.** Anordnung nach einem der Ansprüche 1 bis 9, **dadurch gekennzeichnet, dass** die Tiefenabmessungen jeweils aus einer Platte und an dieser entlang geführten Rahmenabschnitten gebildeter Module geringer sind als 30%, insbesondere geringer als 20% der Breite der zusammengefügten Muldenanordnung.

**11.** Verfahren zur Herstellung einer Kippmuldenanordnung aus wenigstens einer Vorderwandplatte, zwei Seitenplatten, einer Bodenplatte und einer Rahmenanordnung mit entlang der verschiedenen Platten geführten Rahmenabschnitten, **dadurch gekennzeichnet, dass** die einzelnen Platten separat mit den daran entlang geführten Rahmenabschnitten zu Modulen fest verbunden werden, dass die getrennten Module einem oder mehreren Verfahrensschritten zur Oberflächenbeschichtung unterzogen und danach mittels Fügeelementen zusammengefügt und nicht zusätzlich verschweißt werden.

**12.** Verfahren nach Anspruch 11, **dadurch gekennzeichnet, dass** für wenigstens ein Modul die Verfahrensschrittfolge für die Oberflächenbeschichtung von der Verfahrensschrittfolge anderer Module verschieden ist.

**13.** Verfahren nach Anspruch 11 oder 12, **dadurch gekennzeichnet, dass** die Oberflächenbeschichtung wenigstens einen Tauchlackierungs-Verfahrensschritt, insbesondere einen Verfahrensschritt zur kathodischen Tauchlackierung umfasst.

**14.** Verfahren nach Anspruch 13, **dadurch gekennzeichnet, dass** mehrere Module gemeinsam gleichzeitig in demselben Tauchbad behandelt werden.

**15.** Verfahren nach einem der Ansprüche 11 bis 14, **dadurch gekennzeichnet, dass** bei wenigstens einem Modul auf einer bei der späteren Verbindung der Module an einem anderen Modul anliegenden Teilfläche die Abscheidung einer Schicht der Oberflächenbeschichtung verhindert wird.

**16.** Verfahren nach einem der Ansprüche 11 bis 15, **dadurch gekennzeichnet, dass** Bestandteile eines Moduls vor Beginn der Oberflächenbeschichtung miteinander verschweißt werden.

**16.** Verfahren nach einem der Ansprüche 11 bis 16, **dadurch gekennzeichnet, dass** von mehrteiligen Fügeelementen ein Teil vor der Oberflächenbeschichtung an einem Modul befestigt oder erzeugt wird.
